# FASCICULE DE BREVET EUROPEEN

(11) **EP 2 310 932 B1**
(45) Date de publication et mention de la délivrance du brevet: **31.07.2013**
(21) Numéro de dépôt: 09784332.0
(22) Date de dépôt: 05.08.2009
(51) Int. Cl.: G06F 3/041

(54) **PROCÉDÉ D'ACQUISITION ET D'ANALYSE D'UN CAPTEUR TACTILE MULTICONTACTS SUIVANT UN PRINCIPE DICHOTOMIQUE, CIRCUIT ÉLECTRONIQUE ET CAPTEUR TACTILE MULTICONTACTS METTANT EN OEUVRE UN TEL PROCÉDÉ**
VERFAHREN ZUR ACQUISITION UND ANALYSE EINES MEHRKONTAKT-TASTSENSORS UNTER VERWENDUNG EINES DICHOTOMEN PRINZIPS UND ELEKTRONISCHE SCHALTUNG UND MEHRKONTAKT-TASTSENSOR ZUR IMPLEMENTIERUNG EINES SOLCHEN VERFAHRENS
METHOD FOR THE ACQUISITION AND ANALYSIS OF A MULTI-CONTACT TACTILE SENSOR USING A DICHOTOMOUS PRINCIPLE, AND ELECTRONIC CIRCUIT AND MULTI-CONTACT TACTILE SENSOR IMPLEMENTING ONE SUCH METHOD

(30) Priorité: 05.08.2008 FR 0804468
(43) Date de publication de la demande: 20.04.2011
(73) Titulaire: Stantum, 33300 Bordeaux (FR)
(72) Inventeur: JOGUET, Pascal, F-33670 Sadirac (FR); OLIVIER, Julien, F-33000 Bordeaux (FR)
(74) Mandataire: Stankoff, Hélène
(86) Numéro de dépôt international: PCT/FR2009/000979
(87) Numéro de publication internationale: WO 2010/015750

(56) Documents cités:
- US-A1- 2006 152 499

## Description

La présente invention concerne un procédé d'acquisition et d'analyse d'un capteur tactile multicontacts suivant un principe dichotomique, un circuit électronique et un capteur tactile multicontacts mettant en oeuvre un tel procédé.

### DOMAINE TECHNIQUE

La présente invention concerne le domaine des capteurs tactiles multicontacts. Ce type de capteur est muni de moyens d'acquisition simultanée de la position, la pression, la taille, la forme et le déplacement de plusieurs doigts sur sa surface, afin de commander un équipement, de préférence par l'intermédiaire d'une interface graphique. Ils peuvent être utilisés, de manière non limitative, en tant qu'interfaces pour des ordinateurs personnels, portables ou non, des téléphones cellulaires, des guichets automatiques (banques, points de ventes, billetterie), des consoles de jeu, des lecteurs multimédia portatifs (baladeurs numériques), du contrôle d'équipements audiovisuels ou électroménagers, du contrôle d'équipements industriels, des navigateurs GPS.

La présente invention concerne plus particulièrement un procédé d'acquisition et d'analyse d'un capteur tactile multicontacts comprenant une matrice de points de capture et un circuit électronique d'acquisition et d'analyse pour commander l'acquisition et l'analyse de la matrice, ce procédé comportant successivement une étape d'acquisition d'une zone de détection du capteur pour déterminer l'état de chacun des points de capture de la zone de détection et une étape d'analyse de cette zone de détection pour délivrer une information fonction de l'état d'activation des points de capture.

### ÉTAT DE LA TECHNIQUE ANTERIEURE

On connaît dans l'état de la technique des capteurs tactiles multicontacts, permettant de détecter la présence ainsi que l'état de plusieurs points de contact à la fois. Un tel capteur peut être de type matriciel. Une mesure de tension aux bornes de chaque noeud de la matrice est effectuée de manière séquentielle et rapide afin de recréer une image du capteur plusieurs fois par seconde.

En vue d'une utilisation pour des applications nécessitant un temps de réaction imperceptible de ces capteurs (dactylographie, jeu vidéo, contrôle d'application musicale ou multimédia), il est impératif de pouvoir mesurer l'activité d'un doigt avec une latence maximale de 20 millisecondes.

On a proposé dans l'état de la technique une solution décrite dans le document de brevet FR 2 866 726 visant un dispositif de contrôle par manipulation d'objets graphiques virtuels sur un écran tactile multicontacts. Ce dispositif comprend en outre un circuit électronique d'acquisition et d'analyse permettant d'acquérir et d'analyser les données du capteur avec une fréquence d'échantillonnage de 100 Hz. Le capteur peut être divisée en plusieurs zones afin d'effectuer un traitement parallèle sur ces zones.

L'inconvénient de cette solution réside dans la quantité d'information générée par la mesure de tous les points du capteur à une fréquence de balayage élevée. En effet, le contrôleur procède au balayage de l'ensemble du capteur, indépendamment de l'existence d'un contact. Ainsi, même en l'absence de contact, tout le capteur est balayé. De même, lorsqu'une seule zone de contact est détectée, tout le reste du capteur est balayé. De manière générale, il est souhaitable d'augmenter la résolution, c'est-à-dire de diminuer la dimension de chaque cellule du capteur. Or pour une fréquence de balayage donnée, l'augmentation de la résolution augmente la quantité d'information. La résolution au niveau de chaque zone de contact résulte d'un compromis entre, d'une part, la résolution spatiale du capteur (le nombre de cellules balayées) et, d'autre part, la résolution temporelle (le temps de mesure sur chaque cellule). Dans l'usage courant de ce type de capteur, le nombre de points de contact activé est en moyenne très inférieur au nombre de points de contact total du capteur activables.

On connaît également dans le document US 2006/152499 un capteur tactile mettant en oeuvre une technologie de détection de contacts par détection d'ondes acoustiques surfaciques ou de vibrations.

### OBJET DE L'INVENTION

Le but de la présente invention est de remédier à ces problèmes techniques, en permettant de diminuer la quantité d'acquisitions nécessaire à la détermination de chacun des points de capture activés pour un nombre de points de capture donné.

L'invention propose pour cela de procéder à une succession d'acquisitions et d'analyses suivant un principe dichotomique dans le but de réduire le nombre d'étapes d'acquisition au minimum nécessaire en fonction du nombre de points de capture activés.

L'approche de la solution a consisté à chercher à se dispenser de ce compromis entre résolution spatiale et résolution temporelle, en effectuant des balayages de résolutions spatiales différentes sur des zones de détection différentes du capteur. Cette évolution de la résolution spatiale doit être de sorte que, dans un premier temps, l'ensemble du capteur soit balayé à fréquence basse, afin de déterminer les zones de contact. Dans un deuxième temps, seule des zones de détection comprenant les zones de contacts détectées seront à nouveaux balayées avec une résolution spatiale améliorée. Ce procédé peut être itératif jusqu'à obtention de zones de détection balayées suffisamment étroites vis-à-vis des zones de contact détectées. Afin d'obtenir une fréquence globale de balayage identique à celle lors d'un balayage normal de l'ensemble du capteur, ces balayages à résolution spatiale améliorée s'effectueront à une fréquence supérieure à la fréquence globale de balayage.

Dans ce but, la présente invention propose un procédé d'acquisition et d'analyse selon la revendication 1.

Un tel procédé permet de diminuer la quantité de mesures à effectuer. En effet, à chaque nouvelle itération, l'acquisition ne se produit que sur une des zones de détection précédemment acquises en fonction de la détection d'un point de capture activé. Ce procédé permet de ne pas effectuer de mesure sur l'ensemble des zones de détection ne présentant pas de contact activé.

Lors de la première itération, l'étape d'acquisition est réalisée sur l'ensemble du capteur. Il est ainsi possible d'obtenir une information sur l'état de l'ensemble du capteur avant de procéder aux itérations suivantes qui affineront la localisation des points de contact.

Lors d'une itération, on divise la zone de détection à traiter en sous-zones de détection de dimension inférieure, on acquiert indépendamment des informations de contact sur chaque sous-zone de détection. L'itération suivante sera effectuée dans chaque sous-zone de détection ayant présenté une information de contact. On évite ainsi d'effectuer des itérations dans les zones de détection ne présentant aucun point de capture activé.

Avantageusement, lorsque aucun point de capture n'est détecté comme étant activé lors d'une itération, l'itération suivante est réalisée sur l'ensemble du capteur.

Avantageusement, la zone de détection acquise lors des étapes d'acquisition et d'analyse de chaque itération est de forme rectangulaire.

Selon un mode particulier de réalisation, à chaque itération, les dimensions de la zone de détection à acquérir sont divisées respectivement sur chaque axe par deux nombres.

Préférentiellement, à chaque itération, la dimension de la zone de détection à acquérir est divisée par quatre par rapport à la dimension de la zone de détection acquise lors de l'itération précédente. Cela permet de mettre en oeuvre un procédé d'acquisition et d'analyse à proprement parler dichotomique. A chaque itération, la zone de détection précédemment acquise est divisée en quatre sous-zones de détection d'égales dimensions et la position de la zone de contact y est repérée. Ainsi, lors de chaque itération, seule la sous-zone de détection ayant comporté la zone de contact sera à nouveau balayée.

Dans un mode de réalisation visant le cas où plusieurs zones de contacts sont détectées, si plusieurs sous-zones de détection comportant des points de capture activés sont détectées de manière distincte lors d'une itération, les étapes d'acquisition et d'analyse lors de l'itération suivante sont réalisées en parallèle au niveau de chaque zone de détection correspondant à chacune des sous-zones de détection comportant des points de capture activés.

L'invention concerne également un circuit électronique d'acquisition et d'analyse pour capteur tactile multicontacts comprenant une matrice de points de capture, comportant des lignes et des colonnes, mettant en oeuvre un tel procédé d'acquisition et d'analyse.

Selon un premier mode de mise en oeuvre de l'invention, la mesure d'une zone de détection est effectuée en alimentant simultanément toutes les colonnes de la zone de détection et en mesurant sur toutes les lignes de la zone de détection mises en commun.

Selon un deuxième mode de mise en oeuvre de l'invention, la mesure d'une zone de détection est effectuée en alimentant simultanément toutes les colonnes de la zone de détection et en mesurant sur toutes les lignes de la zone de détection séparément.

Dans le cas d'un capteur tactile multicontacts comprenant une matrice active de points de capture comprenant un transistor, la mesure d'une zone de détection est préférentiellement effectuée en alimentant simultanément toutes les colonnes et toutes les lignes de la zone de détection et en mesurant l'électrode commune du capteur.

L'invention concerne enfin un capteur tactile multicontacts comprenant une matrice de points de capture et un tel circuit électronique d'acquisition et d'analyse pour commander l'acquisition et l'analyse de la matrice, mettant en oeuvre un tel procédé d'acquisition et d'analyse.

### BREVE DESCRIPTION DES DESSINS

L'invention sera mieux comprise à la lecture de la description détaillée d'un exemple non limitatif de réalisation, accompagnée de figures représentant respectivement:
- la figure 1, une vue d'un dispositif électronique tactile multicontacts à matrice passive,
- la figure 2, un diagramme d'un procédé d'acquisition sur une zone du capteur mis en oeuvre par le circuit électronique,
- la figure 3, un diagramme d'un procédé d'acquisition et d'analyse selon un mode de réalisation de la présente invention, et
- les figures 4A à 4C, différentes situations où est mis en oeuvre le procédé d'acquisition et d'analyse selon la présente invention.

### EXPOSE DETAILLE DE MODES DE REALISATION PARTICULIERS

Un circuit électronique d'acquisition et d'analyse conforme à l'invention vise à s'intégrer dans un capteur tactile multicontacts de type matriciel. Il peut s'agir d'une matrice passive, c'est-à-dire composée de deux couches de matériau conducteur transparent arrangées en matrice et séparées par une couche isolante, ou d'une matrice active, pour laquelle chaque noeud de la matrice est constitué d'un composant actif tel qu'un transistor ou une diode. Les axes de la matrice passive ou active sont nommés colonnes pour la partie commandée et lignes pour la partie mesurée. L'intersection projetée d'une ligne et d'une colonne forme un noeud.

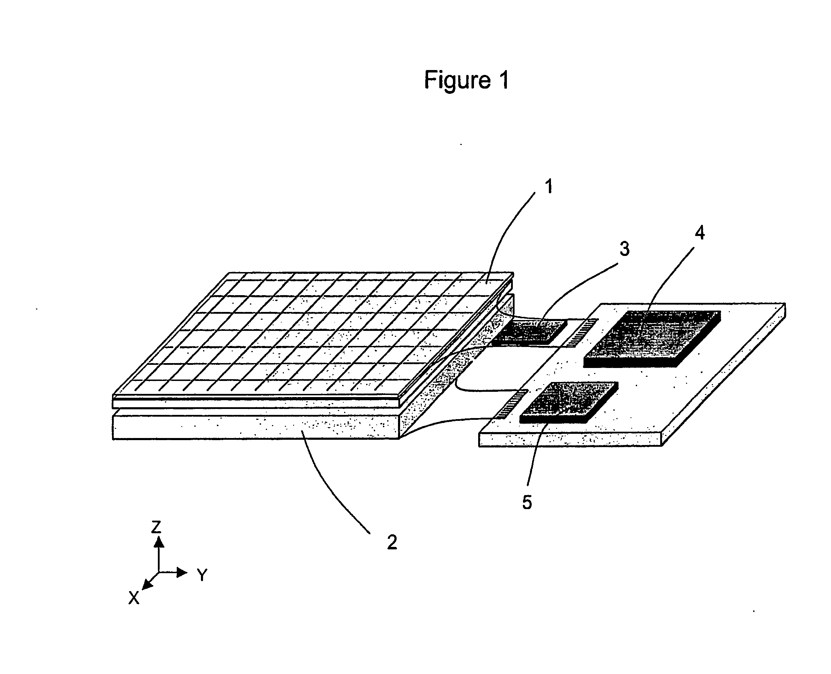

La figure 1 représente une vue d'un dispositif électronique tactile comprenant :
- un capteur tactile matriciel 1,
- un écran de visualisation 2,
- une interface de capture 3,
- un processeur principal 4, et
- un processeur graphique 5.

Le premier élément fondamental de ce dispositif tactile est le capteur tactile 1, nécessaire à l'acquisition - la manipulation multicontacts - à l'aide d'une interface de capture 3. Cette interface de capture 3 contient les circuits d'acquisition et d'analyse. Le capteur tactile 1 est de type matriciel. Il peut être éventuellement divisé en plusieurs parties afin d'accélérer la captation, chaque partie étant scannée simultanément.

Les données issues de l'interface de capture 3 sont transmises après filtrage, au processeur principal 4. Celui-ci exécute le programme local permettant d'associer les données de la dalle à des objets graphiques qui sont affichés sur l'écran 2 afin d'être manipulés. Le processeur principal 4 transmet également à l'interface graphique 5 les données à afficher sur l'écran de visualisation 2. Cette interface graphique peut en outre être piloté par un processeur graphique.

Le capteur matriciel 1 est par exemple un capteur de type résistif ou de type capacitif projeté. Il est composé de deux couches transparentes sur lesquelles sont agencées des lignes ou colonnes correspondant à des fils conducteurs. Ces couches forment ainsi un réseau matriciel de fils conducteurs.

Lorsque l'on veut savoir si un contact est activé, on mesure les caractéristiques électriques - tension capacitance ou inductance - aux bornes de chaque noeud de la matrice. Le dispositif permet d'acquérir les données sur l'ensemble du capteur 1 avec une fréquence d'échantillonnage de l'ordre de 100 Hz, en mettant en oeuvre le capteur 1 et le circuit de commande intégré dans le processeur principal 4.

Dans le cas d'un capteur tactile à matrice passive, l'acquisition est effectuée de la façon suivante : on alimente les colonnes et on détecte la réponse sur chacune des lignes du capteur. On détermine en fonction de ces réponses des zones de contact qui correspondent aux noeuds dont l'état est modifié par rapport à l'état au repos. On détermine un ou plusieurs ensembles de noeuds adjacents dont l'état est modifié. Un ensemble de tels noeuds adjacents définit une zone de contact. On calcule à partir de cet ensemble de noeud une information de position, qualifiée de curseur au sens du présent brevet. Dans le cas de plusieurs ensembles de noeuds séparés par des zones non actives, on déterminera plusieurs curseurs indépendants pendant une même phase de balayage.

Cette information est rafraîchie périodiquement au cours de nouvelles phases de balayage. Les curseurs sont créés, suivis ou détruits en fonction des informations obtenues au cours des balayages successifs. Le curseur est à titre d'exemple calculé par une fonction barycentrique de la zone de contact. Le principe général est de créer autant de curseurs qu'il y a de zones de contact déterminée sur le capteur tactile et de suivre leur évolution dans le temps. Lorsque l'utilisateur retire ses doigts du capteur, les curseurs associés sont détruits. De cette manière, il est possible de capter la position et l'évolution de plusieurs doigts sur le capteur tactile simultanément.

Le processeur principal 4 exécute le programme permettant d'associer les données du capteur à des objets graphiques qui sont affichés sur l'écran de visualisation 2 afin d'être manipulés.

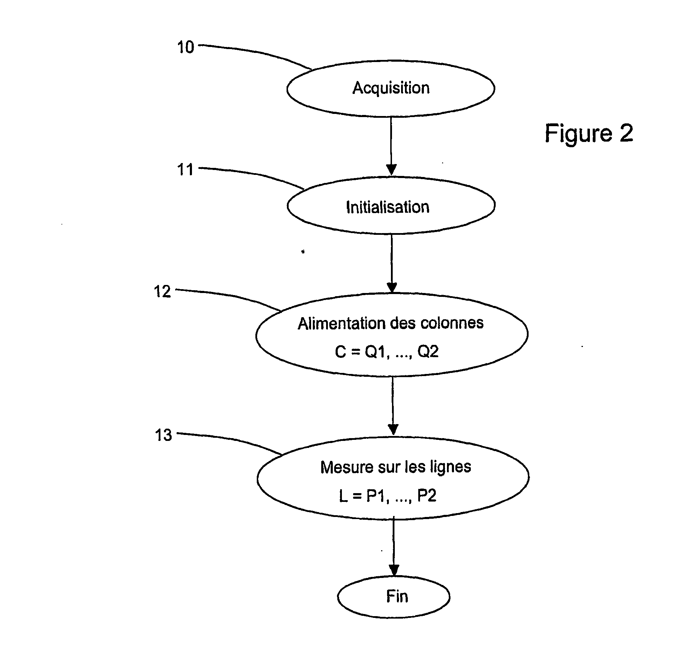

La figure 2 représente un diagramme d'un procédé d'acquisition sur une zone [P1,P2,Q1,Q2] du capteur mis en oeuvre par le circuit électronique.

Le capteur matriciel 1 comporte N lignes et M colonnes. Ce procédé 10 a pour fonction de déterminer l'état de la zone de détection du capteur matriciel 1, à savoir si cette zone comprend au moins un point de contact. Cette zone de détection [P1,P2,Q1,Q2] du capteur comprend P=P2-P1 lignes et Q=Q2-Q1 colonnes. Le contour de cette zone de détection est défini par les paramètres entiers P1, P2, Q1, Q2. Le procédé 10 réalise ainsi une mesure de la zone de détection délimitée par les lignes P1 à P2 et les colonnes Q1 à Q2.

Ce procédé correspond à une mesure de la zone de détection [P1,P2,Q1,Q2] en un seul bloc. La caractéristique électrique mesurée de cette zone de détection est par exemple la tension. Ce procédé permet de donner l'état de la zone de détection [P1,P2,Q1,Q2] du capteur matriciel 1 à un instant donné.

Le procédé d'acquisition 10 commence par une étape d'initialisation 11 des données obtenues lors d'une acquisition précédente. L'axe des colonnes constitue ici l'axe d'alimentation, et l'axe des lignes celui de détection. Le procédé réalise ensuite l'alimentation 12 des colonnes Q1 à Q2 pendant qu'est effectuée une mesure 13 simultanée de toutes les lignes P1 à P2.

On obtient alors une mesure sur l'ensemble du bloc délimité par les colonnes Q1 et Q2 et par les lignes P1 et P2. La détection d'une tension non nulle signifie qu'il existe au moins un point de contact dans la zone de détection [P1,P2,Q1,Q2], tandis que la détection d'une tension nulle signifie l'absence de contact au sein de cette zone de détection [P1,P2,Q1,Q2].

Ce procédé d'acquisition est utilisé pour réaliser le procédé d'acquisition et d'analyse selon l'invention, décrit ci-après, afin d'effectuer une acquisition sur une zone de détection pour obtenir une information de contact sur la zone entière et non sur chacun des noeuds de cette zone.

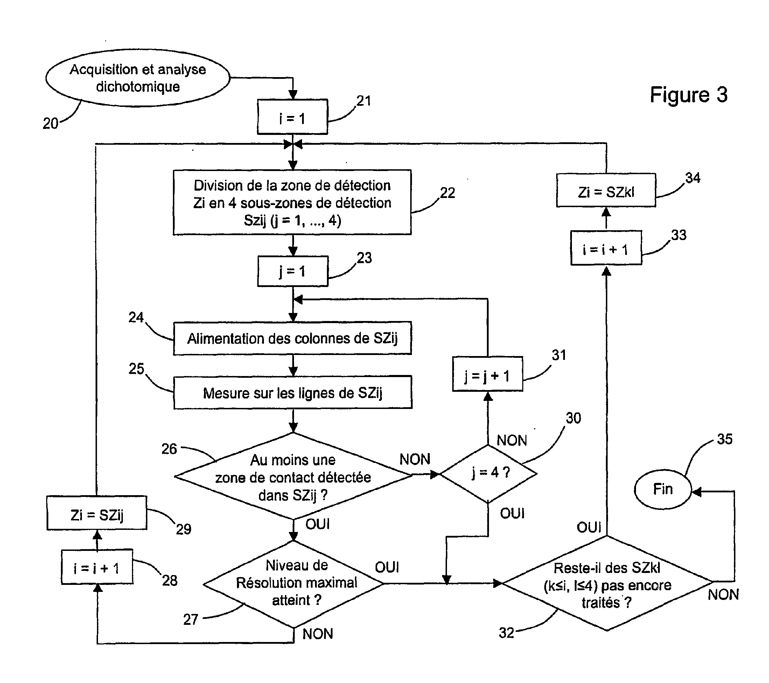

La figure 3 représente un diagramme d'un procédé d'acquisition et d'analyse mis en oeuvre selon un mode de réalisation de l'invention.

Ce procédé 20 est constitué d'une série d'étapes itératives :
- début de l'itération sur une zone de détection,
- division de la zone de détection en N sous-zones de détection,
- pour chaque sous-zone de détection :
   - commande commune des colonnes relatives à la sous-zone,
   - mesure des lignes relatives à la sous-zone,
   - détermination de l'information de contact de la sous-zone,
   - si un contact est détecté, itération suivante sur la sous-zone.

La première zone considérée lors du procédé 20 est la zone Z1 correspondant à l'ensemble du capteur. Cette zone est divisée lors de l'étape 22 en quatre sous-zones SZ11, SZ12, SZ13 et SZ14. On procède ensuite à l'alimentation 24 des colonnes de la première sous-zone SZ11 et en même temps à la mesure 25 sur les lignes de cette sous-zone SZ11. Ces étapes d'alimentation 24 et de mesure 25 sont précédées par une étape d'initialisation (non représentée) de la sous-zone de détection considérée.

Si aucun contact n'est détecté dans cette sous-zone SZ11, on procède à l'alimentation 24 des colonnes de SZ12 et la mesure 25 sur ses lignes, et ainsi de suite jusqu'à avoir effectué ces opérations sur les quatre sous-zones SZ11, SZ12, SZ13 et SZ14.

Si un contact est présent dans la sous-zone SZ11, on vérifie tout d'abord si le niveau de résolution spatial maximal est atteint. Si ce dernier est atteint, il n'est pas possible de diviser la sous-zone SZ11 considérée en 4 nouvelles autres sous-zones. S'il n'est pas atteint, la sous-zone SZ11 devient une zone Z2 sur laquelle est effectuée à nouveau une division 22 en quatre sous-zones SZ21, SZ22, SZ23 et SZ24, puis des alimentations 24, mesures 26 et détection 26 de contact sur ces quatre sous-zones de manière successive et itérative, de manière identique a ce qui avait été effectué sur la sous-zone SZ11. Les zones sur lesquelles sont opérées ces différentes étapes sont dénommées « Zi », i étant un incrément permettant de distinguer ces zones à traiter les unes des autres.

Ce procédé se poursuit ainsi jusqu'à ce que le niveau de résolution maximal soit atteint ou que les quatres sous-zones soient traitées. Dès lors, il est procédé à la vérification 32 de l'existence éventuelle d'autres sous-zones qui n'auraient pas été traitées. Si une sous-zone « SZkl » (avec k≤i et l≤4, i étant un incrément servant à distinguer les zones traitées successivement) n'a pas été traitée (c'est-à-dire sur laquelle il n'a pas été procédé à une alimentation des colonnes, une mesure sur les lignes et une détermination de l'existence éventuelle d'un contact dans cette sous-zone), le traitement est à nouveau appliquée à cette sous-zone SZkl. Pour cela, l'entier i est incrémenté d'une unité est la sous-zone SZkl devient une zone Zi.

Lorsqu'il n'y a plus de sous-zone à traiter, on procède à l'arrêt 35 du procédé d'acquisition et d'analyse. Ce procédé permet ainsi de déterminer les zones de détection sur lesquelles un contact est présent, jusqu'à un niveau de résolution spatiale prédéterminé. Cette prédétermination peut être opérée de manière manuelle par l'utilisateur ou être simplement fixée par le nombre de noeuds du capteur. Il est donc possible de n'obtenir des informations avec le niveau de résolution maximal que sur les zones de contact activées. Toutes les sous-zones pour lesquelles aucun contact n'a été détecté n'ont pas été traitées lors de ce procédé et n'ont donc pas été observé jusqu'au niveau de résolution spatiale maximal, ce qui permet de limiter de manière significative le nombre d'informations obtenues lors de l'acquisition et l'analyse du capteur.

Ce procédé réalise de manière itérative :
d es étapes d'acquisition, correspondant aux étapes d'alimentation 24 et de mesure 25 (précédés d'une étape d'initialisation de la zone à acquérir, cette d'initialisation étape n'étant pas représentée sur la figure 3), et
d es étapes d'analyse, correspondant à l'étape d'interrogation 26 sur la présence éventuelle d'un contact dans la zone de détection sur laquelle est réalisée l'acquisition.

Une fois terminé le procédé d'acquisition et d'analyse 20, le logiciel est apte déterminer des curseurs correspondant aux zones de contact activées et à appliquer aux objets graphiques virtuels de l'écran tactile les différents traitements spécifiques afin de rafraîchir l'écran tactile en temps réel.

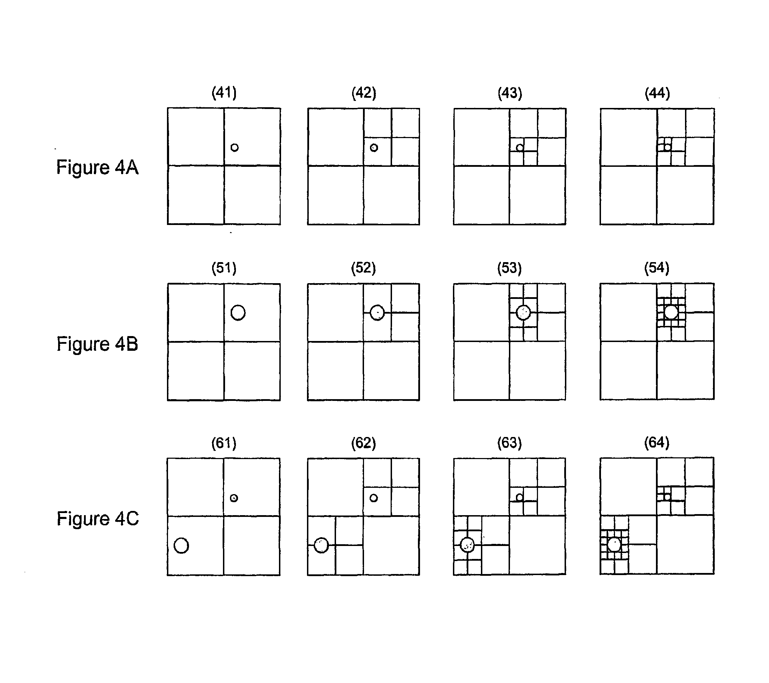

Les figures 4A et 4C illustrent respectivement différentes situations où le procédé d'analyse et d'acquisition selon la présente invention est mis en oeuvre.

Chaque zone de détection est divisée en 4 sous-zones de détection lors de chaque itération. Ainsi quatre itérations successives permettent d'obtenir une résolution spatiale égale à 1/16-ième sur chaque axe.

En référence à la figure 4A, une seule zone de contact est activée sur le capteur. Lors de la première itération 41, la zone de détection comprenant l'ensemble du capteur est divisée en quatre sous-zones de détection d'égales dimensions et la position de la zone de contact est repérée dans une des sous-zones de détection. Lors de la seconde itération 42, la zone de détection comportant la zone de contact détectée est séparée en quatre sous-zones de détection d'égales dimensions, puis la position de la zone de contact est à nouveau repérée dans ces nouvelles sous-zones de détection. Les itérations suivantes, 43 et 44, suivent le même procédé, jusqu'à l'obtention de la résolution spatiale souhaitée.

Plus généralement, le nombre de zones de détection mesuré dépend du nombre de zones de contact activé ainsi que du nombre d'itérations maximal.

Ainsi ce procédé dichotomique, dans l'exemple de la figure 4A, permet d'obtenir en quatre itérations (16 mesures) la position du point de contact avec une précision d'1/16-ième sur chaque axe. Dans le cas d'un balayage classique, une mesure de précision équivalente aurait nécessité 256 mesures.

En référence à la figure 4B, une zone de contact est activée sur plusieurs zones de détection. Lors de la première itération 51, la zone de détection comprenant l'ensemble du capteur est divisée en quatre sous-zones de détection d'égales dimensions et la position de la zone de contact est repérée sur une seule des sous-zones de détection. Lors de la seconde itération 52, cette nouvelle zone est séparée en quatre sous-zones d'égales dimensions, la zone de contact est détectée sur deux nouvelles sous-zones. Dès lors, lors des itérations 53 et 54, chacune de ces nouvelles zones de détection ayant en partie au moins une zone de contact sera séparée en quatre nouvelles sous-zones de détection et la position de la zone de contact y sera repérée.

En référence à la figure 4C, deux zones de contacts distinctes sont détectées dès la première itération 61. Lors des itérations suivantes 62, 63 et 64, chaque zone de détection repérée comme comportant au moins en partie une zone de contact sera divisée en quatre sous-zones de détection d'égales dimensions et les positions des zones de contact y seront repérées, jusqu'à l'obtention de la résolution souhaitée au niveau des zones de contact.

Dans ces deux dernières situations, illustrées par les figures 4B et 4C, ce procédé permet d'obtenir en quatre itérations (respectivement 32 et 44 mesures) la position des points de contact avec une précision d'1/16-ième sur chaque axe. Dans le cas d'un balayage classique, une mesure de précision équivalente aurait nécessité 256 mesures.

Dans un autre mode de réalisation de l'invention, le procédé dichotomique est réalisé suivant deux dichotomies combinées. Une première étape consiste en une dichotomie horizontale et une seconde étape consiste en une dichotomie verticale. Chacune de ces deux étapes correspond à une séparation de la zone précédemment acquise en deux nouvelles zones d'égales dimensions. La succession de ces deux dichotomies produit un procédé dichotomique identique à celui décrit ci-dessus et illustré par les figures 3, 4A, 4B et 4C.

Dans un autre mode de réalisation de l'invention, le procédé dichotomique est mis en oeuvre non pas en réalisant une séparation de la zone précédemment acquise en quatre nouvelles zones, mais en un nombre quelconque de nouvelles zones différent, par exemple neuf, douze ou seize.

Selon plusieurs modes de réalisation, l'implémentation du procédé itératif est réalisable selon les exemples suivants :
u ne itération sur une sous-zone est directement effectuée après la détection d'un point de contact activé sur celle-ci, ce qui nécessite une récursion fonctionnelle et donc la mémorisation des emplacements et tailles des zones englobant ladite sous-zone,
u ne itération consistant en la mesure de toutes les sous-zones correspondant à toutes les zones de détection comprenant au moins un point de contact activé détectées par l'itération précédente, ce qui ne nécessite pas de récursion mais entraîne une plus grande quantité de données mémorisées.

Les modes de réalisation précédemment décrits de la présente invention sont donnés à titre d'exemples et ne sont nullement limitatifs. Il est entendu que l'homme du métier est à même de réaliser différentes variantes de l'invention sans pour autant sortir du cadre du brevet.

## Revendications

1. Procédé d'acquisition et d'analyse d'un capteur tactile multicontacts comprenant une matrice de points de capture comportant des lignes et des colonnes et un circuit électronique d'acquisition et d'analyse pour commander l'acquisition et l'analyse de la matrice, le procédé comportant successivement une étape d'acquisition (24,25) d'une zone de détection du capteur pour diviser la zone de détection en sous-zones de détection et pour déterminer l'état de chacun des points de capture des sous-zones de détection, et une étape d'analyse (26) desdites sous-zones de détection, par commande commune des colonnes relatives à la sous-zone, pour délivrer une information fonction de l'état d'activation des points de capture, et dans lequel les étapes d'acquisition (24,25) et d'analyse (26) sont répétées de manière itérative, la zone de détection considérée pendant la première itération étant la zone (Z1) correspondant à l'ensemble du capteur, ladite étape d'acquisition (24,25) étant réalisée sur une zone de détection correspondant à une sous-zone de détection comportant des points de capture activés déterminés lors de l'étape d'analyse (26) précédente, ladite zone de détection étant de dimension inférieure à la celle de la zone de détection acquise lors de l'étape d'acquisition (24,25) précédente, ladite itération étant réalisée jusqu'à l'obtention (27) d'une résolution spatiale prédéterminée.

2. Procédé d'acquisition et d'analyse selon la revendication 1, dans lequel lorsque aucun point de capture n'est détecté comme étant activé lors d'une itération, l'itération suivante est réalisée sur l'ensemble du capteur.

3. Procédé d'acquisition et d'analyse selon l'une quelconque des revendications 1 ou 2, dans lequel la zone de détection acquise lors des étapes d'acquisition (24,25) et d'analyse (26) de chaque itération est de forme rectangulaire.

4. Procédé d'acquisition et d'analyse selon l'une quelconque des revendications précédentes, dans lequel, à chaque itération, les dimensions de la zone de détection à acquérir sont divisées respectivement sur chaque axe par deux nombres.

5. Procédé d'acquisition et d'analyse selon la revendication 4, dans lequel, à chaque itération, la dimension de la zone à acquérir est divisée par quatre par rapport à la dimension de la zone acquise lors de l'itération précédente.

6. Procédé d'acquisition et d'analyse selon l'une quelconque des revendications précédentes, dans lequel, si plusieurs sous-zones de détection comportant des points de capture activés sont détectées de manière distincte lors d'une itération, les étapes d'acquisition (24,25) et d'analyse (26) lors de l'itération suivante sont réalisées en parallèle au niveau de chaque zone de détection correspondant à chacune desdites sous-zones de détection comportant des points de capture activés.

7. Circuit électronique d'acquisition et d'analyse pour capteur tactile multicontacts comprenant une matrice de points de capture, comportant des lignes et des colonnes, mettant en oeuvre un procédé d'acquisition et d'analyse selon l'une quelconque des revendications précédentes.

8. Circuit électronique d'acquisition et d'analyse selon la revendication 7, dans lequel la mesure d'une zone de détection est effectuée en alimentant simultanément toutes les colonnes de la zone de détection et en mesurant sur toutes les lignes de la zone de détection mises en commun.

9. Circuit électronique d'acquisition et d'analyse selon la revendication 7, dans lequel la mesure d'une zone de détection est effectuée en alimentant simultanément toutes les colonnes de la zone de détection et en mesurant sur toutes les lignes de la zone de détection séparément.

10. Circuit électronique d'acquisition et d'analyse selon la revendication 7 pour capteur tactile multicontacts comprenant une matrice active de points de capture comprenant un transistor, dans lequel la mesure d'une zone de détection est effectuée en alimentant simultanément toutes les colonnes et toutes les lignes de la zone de détection et en mesurant l'électrode commune du capteur.

11. Capteur tactile multicontacts comprenant une matrice de points de capture et un circuit électronique d'acquisition et d'analyse selon l'une quelconque des revendications 7 à 10 pour commander l'acquisition et l'analyse de la matrice, mettant en oeuvre un procédé d'acquisition et d'analyse selon l'une quelconque des revendications 1 à 6.

## Patentansprüche

1. Verfahren zur Erfassung und Analyse für einen berührungsempfindlichen Multikontaktsensor, enthaltend eine Matrix von Messpunkten mit Zeilen und Spalten und eine elektronische Erfassungs- und Analyseschaltung zum Steuern der Erfassung und Analyse der Matrix, wobei das Verfahren aufeinanderfolgend einen Schritt (24, 25) der Erfassung eines Erkennungsbereichs des Sensors umfasst, um den Erkennungsbereich in Erkennungsunterbereiche aufzuteilen und den Zustand eines jeden der Messpunkte der Erkennungsunterbereiche zu ermitteln, sowie einen Schritt (26) der Analyse der Erkennungsunterbereiche durch gemeinsame Steuerung der den Unterbereich betreffenden Spalten, um eine Information als Funktion des Aktivierungszustands der Messpunkte zu liefern, und in welchem der Erfassungsschritt (24, 25) und der Analyseschritt (26) iterativ wiederholt werden, wobei der während der ersten Iteration betrachtete Erkennungsbereich der Bereich (Z1) ist, der dem gesamten Sensor entspricht, wobei der Erfassungsschritt (24, 25) an einem Erkennungsbereich erfolgt, der einem Erkennungsunterbereich mit aktivierten Messpunkten entspricht, die bei dem vorhergehenden Analyseschritt (26) ermittelt wurden, wobei der Erkennungsbereich eine kleinere Abmessung hat als der Erkennungsbereich, der bei dem vorhergehenden Erfassungsschritt (24, 25) erfasst wurde, wobei die Iteration bis zum Erhalt (27) einer vorbestimmten Raumauflösung erfolgt.

2. Erfassungs- und Analyseverfahren nach Anspruch 1,
wobei dann, wenn bei einer Iteration kein Messpunkt als aktiviert erfasst wird, die nachfolgende Iteration an dem gesamten Sensor erfolgt.

3. Erfassungs- und Analyseverfahren nach einem der Ansprüche 1 oder 2,
wobei der bei dem Erfassungsschritt (24, 25) und dem Analyseschritt (26) jeder Iteration erfasste Erkennungsbereich von rechteckiger Form ist.

4. Erfassungs- und Analyseverfahren nach einem der vorangehenden Ansprüche,
wobei bei jeder Iteration die Abmessungen des zu erfassenden Erkennungsbereichs jeweils auf jeder Achse durch zwei Zahlen dividiert werden.

5. Erfassungs- und Analyseverfahren nach Anspruch 4,
wobei bei jeder Iteration die Abmessung des zu erfassenden Bereichs in Bezug auf die Abmessung des bei der vorhergehenden Iteration erfassten Bereichs durch vier dividiert wird.

6. Erfassungs- und Analyseverfahren nach einem der vorangehenden Ansprüche,
wobei dann, wenn bei einer Iteration mehrere Erkennungsunterbereiche mit aktivierten Messpunkten gesondert erfasst werden, der Erfassungsschritt (24, 25) und der Analyseschritt (26) bei der nächsten Iteration bei jedem Erkennungsbereich, der jedem der Erkennungsunterbereiche mit aktivierten Messpunkten entspricht, parallel erfolgen.

7. Elektronische Erfassungs- und Analyseschaltung für einen berührungsempfindlichen Multikontaktsensor mit einer Matrix von Messpunkten, die Zeilen und Spalten enthält, bei der ein Erfassungs- und Analyseverfahren nach einem der vorangehenden Ansprüche durchgeführt wird.

8. Elektronische Erfassungs- und Analyseschaltung nach Anspruch 7, wobei das Vermessen eines Erkennungsbereichs durch gleichzeitige Versorgung sämtlicher Spalten des Erkennungsbereichs und durch Messen an sämtlichen zusammengenommenen Zeilen des Erkennungsbereichs erfolgt.

9. Elektronische Erfassungs- und Analyseschaltung nach Anspruch 7, wobei das Vermessen eines Erkennungsbereichs durch gleichzeitige Versorgung sämtlicher Spalten des Erkennungsbereichs und durch Messen an sämtlichen separat genommenen Zeilen des Erkennungsbereichs erfolgt.

10. Elektronische Erfassungs- und Analyseschaltung nach Anspruch 7 für einen berührungsempfindlichen Multikontaktsensor, enthaltend eine aktive Matrix von Messpunkten mit einem Transistor, wobei das Vermessen eines Erkennungsbereichs durch gleichzeitige Versorgung sämtlicher Spalten und sämtlicher Zeilen des Erkennungsbereichs und durch Messen der gemeinsamen Elektrode des Sensors erfolgt.

11. Berührungsempfindlicher Multikontaktsensor, enthaltend eine Matrix von Messpunkten und eine elektronische Erfassungs- und Analyseschaltung nach einem der Ansprüche 7 bis 10 zum Steuern der Erfassung und Analyse der Matrix, wobei ein Erfassungs- und Analyseverfahren nach einem der Ansprüche 1 bis 6 durchgeführt wird.

## Claims

1. Acquisition and analysis method for a multicontact touch-sensitive sensor including a matrix of capture points comprising rows and columns and an acquisition and analysis electronic circuit for controlling acquisition and analysis of the matrix, the method comprising successively a step (24, 25) of acquisition in a sensor detection area in order to divide the detection area into detection sub-areas and to determine the state of each of the capture points of the detection sub-areas and a step (26) of analysis of said detection sub-areas, by a common control of the columns relative to the sub-areas, in order to deliver information as a function of the activation state of the capture points, and wherein the acquisition step (24, 25) and the analysis step (26) are repeated iteratively, the detection area considered during the first iteration being the area (Z1) corresponding to the whole of the sensor, said acquisition step (24, 25) being performed in a detection area corresponding to a detection sub-area containing the activated capture points determined during the preceding analysis step (26), said detection area being smaller than the detection area acquired during the preceding acquisition step (24, 25), and said iteration being effected until a predetermined spatial resolution is obtained (27).

2. Acquisition and analysis method according to claim 1, wherein if no activated capture point is detected during an iteration the next iteration is effected on the whole of the sensor.

3. Acquisition and analysis method according to either of claims 1 or 2, wherein the detection area acquired during the acquisition step (24, 25) and the analysis step (26) of each iteration is of rectangular shape.

4. Acquisition and analysis method according to any of the preceding claims, wherein in each iteration the dimensions on each axis of the detection area to be acquired are respectively divided by two numbers.

5. Acquisition and analysis method according to claim 4, wherein in each iteration the size of the area to be acquired is the size of the area acquired during the preceding iteration divided by four.

6. Acquisition and analysis method according to any of the preceding claims, wherein if a plurality of distinct detection sub-areas comprising activated capture points are detected during an iteration the acquisition step (24, 25) and the analysis step (26) of the next iteration are effected in parallel in each detection area corresponding to each of said detection sub-areas comprising activated capture points.

7. Acquisition and analysis electronic circuit for multicontact touch-sensitive sensors comprising a matrix of capture points, comprising rows and columns, using an acquisition and analysis method according to any of the preceding claims.

8. Acquisition and analysis electronic circuit according to claim 7, wherein the measurement of a detection area is effected by simultaneously energizing all columns of the detection area and measuring in common all rows of the detection area.

9. Acquisition and analysis electronic circuit according to claim 7, wherein a detection area is measured by energizing simultaneously all the columns of the detection area and measuring separately all rows of the detection area.

10. Acquisition and analysis electronic circuit according to claim 7 for multicontact touch-sensitive sensors comprising an active matrix of capture points comprising a transistor, wherein a detection area is measured by simultaneously energizing all columns and all rows of the detection area and measuring the common electrode of the sensor.

11. Multicontact touch-sensitive sensor comprising a matrix of capture points and an acquisition and analysis electronic circuit according to any of claims 7 to 10 for commanding acquisition and analysis of the matrix using an acquisition and analysis method according to any of claims 1 to 6.
